# EUROPEAN PATENT SPECIFICATION

(11) **EP 3 473 483 B1**
(45) Date of publication and mention of the grant of the patent: **02.11.2022**
(21) Application number: 17196910.8
(22) Date of filing: 17.10.2017
(51) Int. Cl.: H02H 3/05, B60L 3/00, H02P 3/22, H02H 7/122, H02P 3/18, B60L 15/00, B60L 3/04

(54) **INVERTER FOR AN ELECTRIC MACHINE, ELECTRIC MACHINE FOR A VEHICLE, VEHICLE AND METHOD FOR OPERATING AN INVERTER**
WECHSELRICHTER FÜR EINE ELEKTRISCHE MASCHINE, ELEKTRISCHE MASCHINE FÜR EIN FAHRZEUG, FAHRZEUG UND VERFAHREN ZUM BETRIEB EINES WECHSELRICHTERS
ONDULEUR POUR MACHINE ÉLECTRIQUE, MACHINE ÉLECTRIQUE POUR VÉHICULE ET PROCÉDÉ DE FONCTIONNEMENT D'UN ONDULEUR

(43) Date of publication of application: 24.04.2019
(73) Proprietor: Valeo eAutomotive Germany GmbH, 91056 Erlangen (DE)
(72) Inventor: BOHLLÄNDER, Marco, 96114 Hirschaid (DE); WIEDMANN, Karsten, 91052 Erlangen (DE)
(74) Representative: Valeo Powertrain Systems

(56) References cited:
- EP-A1- 2 573 928
- DE-A1-102012 101 508
- DE-A1-102013 016 960
- DE-A1-102016 207 254
- JP-A- 2017 184 393
- US-A1- 2013 181 645
- US-A1- 2014 009 096

## Description

The invention relates to an inverter for an electric machine. Aside, the invention relates to an electric machine for a vehicle, a vehicle and a method for operating an inverter.

EP 2 573 928 A1 discloses a power converter connected to a voltage source and prepared for supplying an AC machine. The converter comprises multiple half-bridges and a relay arranged within a supply line of a DC link. Upon detecting a failure by means of a surveillance circuit, the voltage source is disconnected by means of the relay.

US 2013/181645 A1 discloses a drive system for an electric motor, comprising: a connection for a battery and an inverter having an input side connected to an intermediate circuit and an output side having a connection for an electric motor. The intermediate circuit comprises a first thyristor connected in parallel with an intermediate circuit capacitance and configured to be activated by a monitor incorporated in or assigned to the drive system. The drive system further comprises a fuse disposed between the battery and the intermediate circuit. The fuse and the first thyristor are connected in series to the battery operating as power source upon activation of the first thyristor. The first thyristor is activated by the monitor when a measure of an intermediate circuit voltage exceeds a predetermined threshold value. The inverter comprises three upper transistors and three lower transistors, wherein the monitor activates either the three lower transistors or the three upper transistors in addition to activating the first thyristor.

DE 10 2016 207254 A1 discloses an inverter for an electric machine, comprising: a DC link capacitor, a bridge circuit with a controllable switch, a power line that connects the DC link capacitor with a supply terminal of the bridge circuit and a controllable normally-off switch configured to interrupt a current between the DC link capacitor and the bridge circuit.

Further inverters are disclosed in JP 2017 184393 A, DE 10 2013 016960 A1 and DE 10 2012 101508 A1.

Inverters are widely known for converting a DC voltage supplied to a DC link via an input terminal into a multiphase AC output voltage. Particularly with respect to automotive applications, such as battery electric vehicles (BEV) or hybrid electric vehicles, the inverter has to be transferred into a safe mode if a failure is detected or an external signal is received. It has been proposed to use a safe pulse off mode (SPO) as the safe mode realized by switching all switching elements being interconnected to a half bridge for each phase and having a diode connected in parallel into a blocking switching state. Thus, the switching elements work as a rectifier built from the diodes. As at high rates of rotation the electromagnetic force of the stator windings may be higher than the DC voltage, a current may flow from an output terminal via the DC link to the input terminal causing a perceptible braking torque. The braking torque may exceed a tolerable level with respect to automotive functional safety.

To avoid the braking torques, it has been proposed to use an active short circuit (ASC) as safe mode. Therein, the switching elements are in a switching configuration, in which the switching elements connected to a high potential of the DC link are in a conducting state and switching elements connected to a low potential of the DC link are in the blocking state or vice versa.

However, an active short circuit mode requires to hold the switching configuration with a certain integrity. If it is not possible to hold the switching configuration, e.g. due to a damage of a switching element, both switching elements of one or more half bridges may be in the blocking switching state. As such a switching configuration allows a current flow from the output terminal to the input terminal, the braking torques may occur although an active short circuit mode should be adopted.

Thus, it is an object of the present invention to provide a more robust inverter, particularly with respect to automotive safety requirements.

According to the invention, this object is solved by an inverter according to claim 1.

The invention is based upon the consideration to avoid the power transmission from the output terminal to the DC link by the interrupt device. The current flow results from an electromagnetic force (e.m.f.), i. e. voltages induced into stator windings connected to the output terminal, being higher than the voltage supplied to the DC link. If the active short circuit mode is adopted successfully, the current flow will be short-circuited inside the inverter. If the active short circuit mode is not adopted successfully the current flow is interrupted by the interrupt device. In other words, the interrupt device provides an addition actuator path in additional to transferring the switching elements to the active short circuit mode for avoiding the undesired braking torques.

Advantageously, by interrupting the current flow braking torques of the electric machine are avoided effectively. The inverter according to the invention may thus be operated robustly even in the case of an unsuccessful transfer from the pulsing mode into the active short circuit mode. Particularly with respect to automotive applications, the level of functional safety of a vehicle driven by the electric machine is improved.

With respect to a failure modes, effects, and diagnostic analysis (FMEDA), the interrupt device and a controller function of transferring the inverter to the active short circuit mode may be realized with the same automotive security integrity level (ASIL), e.g. ASIL D. Therefore, the interrupt device may be designed such that it realizes a predefined failure in time (FIT) rate. Preferably, the inverter, including the at least one interrupt device, is formed as a single unit mountable and/or connectable to the stator windings and/or a battery supplying the DC voltage.

According to the invention, the inverter comprises a plurality of switching elements being interconnected to a half bridge for each phase of the AC output voltage, wherein the controller is configured to control the switching elements to adopt a switching configuration, in which switching elements connected to a high potential of the DC link are in a conducting switching state and switching elements connected to a low potential of the DC link are in a blocking switching state or vice versa, for transferring the inverter to the active short circuit mode. Preferably, the switching elements are voltage-controlled semiconductor switching elements. The switching elements may comprise a transistor structure, such as insulated gate bipolar transistors (IGBT), insulated gate field-effect transistors, particularly metal oxide semiconductor field-effect transistors (MOSFET), or junction field-effect transistors (JFET). Each switching element may comprise a diode allowing a current flow from the low potential to the high potential and being connected in parallel to the transistor structure. If a switching element fails to be switched into the conducting switching state, both switching elements of the respective half bridge are in the blocking switching state. Then the diodes allow the power transmission from the output terminal to the input terminal. Advantageously, the inverter allows an interrupt of this current flow by using the interrupt device.

With respect to the inverter according to the invention it is preferred that the interrupt device comprises a switching element with a switching path arranged in the line. The switching element of the interrupt device may be denominated or considered as second switching element in order to distinguish it from the first switching elements being interconnected to the half bridges.

Preferably, the switching element may comprise a transistor structure providing the switching path. The transistor structure may be an insulated gate bipolar transistor (IGBT) structure, an insulated gate field-effect transistor, particularly metal oxide semiconductor field-effect transistor (MOSFET) structure, or a junction field-effect transistor (JFET) structure. The interrupt device may also comprise a driver element connected in series to a control terminal, such as a gate terminal, of the switching element. The driver unit may be configured to amplify a control signal provided by the controller causing the switching element to be switched to a conducting switching state in the pulsing mode and to be switched to a blocking switching state for interrupting the line.

Furthermore, the interrupt device may comprise a diode connected in parallel to a switching path of the switching path and allowing a power transmission from the input terminal to the output terminal. The diode may be used as a freewheeling diode, advantageously.

Alternatively or additionally, the interrupt device may comprise an overvoltage protection element configured to convert a power transmitted from the input terminal into the direction of the output terminal into heat. Particularly, the overvoltage protection element converts the transmitted power to heat when the interrupt device interrupts the power transmission from the output terminal to the input terminal. Advantageously, the overvoltage protection element suppresses the current flow induced externally by line inductances. The overvoltage protection element may comprise a varistor and/or a snubber. The overvoltage protection element may be connected to an output-terminal-side terminal of the switching path and/or to the control terminal of the switching element.

Preferably, the interrupt device is connected between the input terminal and a smoothing capacitor forming the DC link. Such a circuitry allows the smoothing capacitor to be connected as near as possible to the first switching elements.

Again with respect to FMEDA considerations, it may be difficult to ensure a certain failure in time rate for a damage of a first switching element. Particularly, a damage of a first switching element may affect other first switching elements resulting in a cascading failure. It may thus be assumed only that a concurrent failure of the function of transferring the inverter to the active short circuit mode and the function of the interrupt device is unlikely. This may render a decomposition of the ASIL of the function of transferring the inverter to the active short circuit state with e.g. ASIL B(D) and the ASIL of the interrupt device with e.g. ASIL B(D) resulting in an overall ASIL D difficult. Thus, the function of transferring the inverter to the active short circuit mode and the function may be both realized with e.g. ASIL D. This may be of high effort since checking for latent faults is difficult while operating the inverter in the pulsing mode. Particularly, it may be necessary to check if the current may be interrupted by the interrupt device while a vehicle is driven. In the following, measures for avoiding these difficulties by providing additional redundancy for interrupting the current are suggested. Therein, a suitable measure for a specific application may be chosen considering different common cause failure scenarios.

With respect to the inverter according to the invention, the controller may be configured to provide a control signal at an output port when triggering the interrupt device. The output signal may be provided to a vehicle control unit being capable to interrupt a connection between a battery of the vehicle and the input terminal. The connection may be interrupted by a vehicle's interrupt device, e.g. a contactor, assigned to the battery. Advantageously, providing the control signal is realized with low effort as the interrupt device is usually provided to the vehicle for disconnecting the battery from an electrical system of the vehicle. At most, it may be necessary to adjust the capability of the vehicle's interrupt device to switch the currents resulting from the electromagnetic force. However, this adjustment has to be performed only once when designing the vehicle.

Alternatively or additionally, two interrupt devices are provided to the inverter according to the invention.

According to a first alternative, the interrupt devices are arranged in series in the same line. With respect to a second alternative, one interrupt device is arranged in a line at a high potential of the DC link and one interrupt device is arranged in a line at a low potential of the DC link.

According to the invention, a current measurement device is arranged in the or a line and configured to measure a current flowing through the line, wherein the controller is configured to control the at least one interrupt device to interrupt the line under the additional condition that the measured current reaches and/or exceeds a predefined threshold value. The current is typically representative for the magnitude of the braking torque. Advantageously, this embodiment allows to interrupt the line only if the braking torque exceeds a predefined magnitude, which may be chosen such that less perceptible and/or tolerable braking torques with respect to functional safety requirements do not trigger the interrupt device. The current measurement device may be connected to the output-terminal-side of the interrupt device.

Furthermore, the above-mentioned object is solved by an electric machine for a vehicle according to claim 11. Preferably, the electric machine is a permanent-magnet synchronous machine.

Aside, the above-mentioned object is solved by a vehicle according to claim 12.

Finally, the above-mentioned object is solved by a method according to claim 13.

All statements referring to the inverter according to the invention refer to the electric machine, the vehicle and method as well, so that advantages of the inverter may be achieved by the electric machine, the vehicle and the method, too.

Further details and advantages are described in the following with reference to the schematic drawings, which show:
- Fig. 1: a block diagram of a first embodiment of an electric machine according to the invention;
- Fig. 2: a block diagram of an interrupt device of the electric machine depicted in fig. 1;
- Fig. 3: a block diagram of a second embodiment of an electric machine according to the invention;
- Fig. 4: a block diagram of a third embodiment of an electric machine according to the invention;
- Fig. 5: a block diagram of a fourth embodiment of an electric machine according to the invention; and
- Fig. 6: a schematic diagram of an embodiment of a vehicle according to the invention.

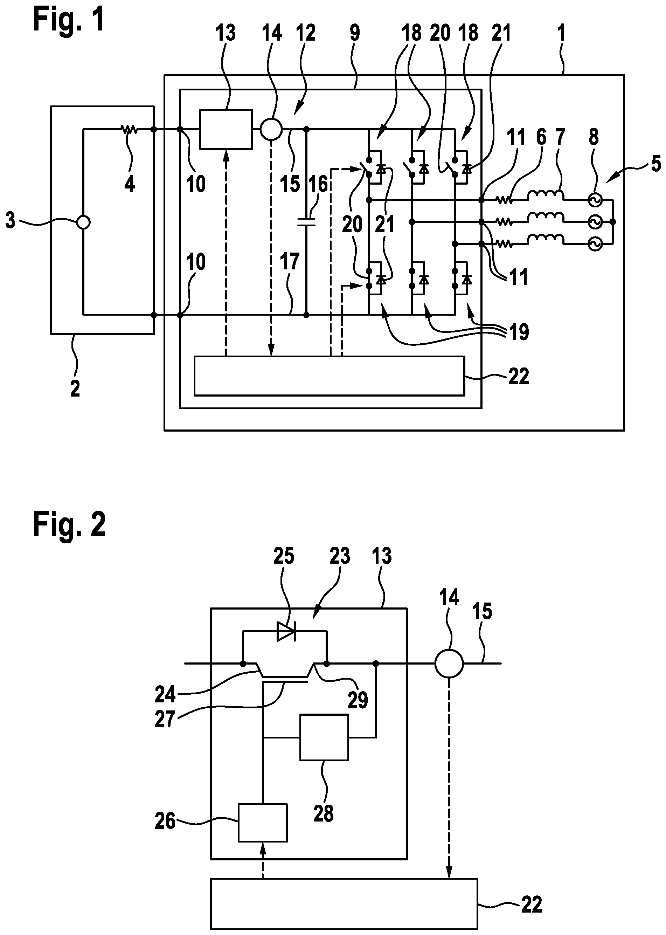

Fig. 1 is a block diagram of a first embodiment of an electric machine 1 connected to a battery 2, represented by a voltage source 3 and an internal resistance 4. Preferably, the electric machine 1 is a permanent-magnet synchronous machine.

The electric machine 1 comprises three stator windings 5 each represented by a resistor 6, an inductance 7 and a voltage source 8 corresponding to an electromagnetic force (e.m.f.) induced by a rotor (not shown). Furthermore, the electric machine 1 comprises an inverter 9 with an input terminal 10 connected to the battery 2 and with an output terminal 11 connected to the stator windings 5.

Inside the inverter 9 a DC link 12 is connected to the input terminal 10, comprising an interrupt device 13 and a current measurement device 14 both arranged in a line 15 at a high potential of the DC link 12 and connected in series to each other. The DC link 12 is formed by a smoothing capacitor 16, connected between the line 15 and a line 17 at a low potential of the DC link 12.

Additionally, the inverter 9 comprises three switching elements 18 connected to the high potential of the DC link 12 and three switching elements 19 connected to the low potential of the DC link 12, wherein the switching elements 18, 19 are interconnected to a half bridge for each phase of an AC output connected to the output terminal 11. Each switching element 18, 19 comprises a transistor structure 20, which is depicted by a switch symbol for reasons of simplicity, and a diode 21. The diode 21 is connected in parallel to the transistor structure 20 and allows a power transmission from the low potential to the high potential. The transistor structure 20 may be an insulated gate bipolar transistor structure (IGBT), an insulated gate field-effect transistor structure, such as a metal oxide semiconductor field-effect transistor (MOSFET) structure, or a junction fed field-effect transistor (JFET) structure. If the transistor structure is a MOSFET structure, the diode 21 may be an internal parasitic diode.

Moreover, the inverter 9 comprises a controller 22, wherein in Fig. 1 signal connections from the controller 22 are depicted in dashed lines.

Fig. 2 is a block diagram of the interrupt device 13 connected in series to the current measurement device 14 along the line 15 and controllable by the controller 22.

The interrupt device 13 comprises a switching element 23 with a transistor structure 24, connected in parallel to a diode 25, which allows a power transmission or a current flow, respectively, from the input terminal 10 to the output terminal 11. The transistor structure 24 may be an insulated gate bipolar transistor (IGBT) structure, an insulated gate field-effect transistor, such as a metal oxide semiconductor field-effect transistor (MOSFET) structure, or a junction fed field-effect transistor (JFET) structure. The interrupt device 13 comprises a driver element 26 connected to a control terminal 27, particularly a gate terminal, of the transistor structure 24 and being controllable by the controller 22. Additionally, the interrupt device 13 comprises overvoltage protection element 28, such as a varistor or a snubber, connected in parallel to the control terminal 27 and a terminal 29 of a switching path of the transistor structure 24.

In the pulsing mode of the inverter 9 the controller 22 provides pulsing signals causing the inverter 9 to convert the DC voltage supplied by the battery 2 to the input terminal 10 into a multiphase AC output voltage at the output terminal 11 for the stator windings 5. The controller 22 provides the pulsing signals such that the switching elements 18, 19 switch between a conducting state and blocking state. In the pulsing mode the switching element 23 of the interrupt device 13 is in the conducting switching state.

In the case of a failure or upon receiving an external signal, the controller 22 transfers the inverter 9 from the pulsing mode into an active short circuit mode. The active short circuit mode is a switching configuration of the switching elements 18, 19 in which the switching elements 18 connected to the high potential are in the blocking state and the switching elements 19 are in the conducting state. By this switching configuration, the stator windings 5 are short-circuited inside the inverter 9.

However, in the case of a failure or damage of one or more of the switching elements 18 the conducting switching state may not be adopted or may be left after having been adopted. The stator winding 5 connected to the half bridge, in which both switching elements 18, 19 are in the blocking state, is thus not any longer short-circuited, but the diodes 21 of the switching elements 18, 19 form a rectifier allowing a power transmission or a current flow, respectively, from the stator windings 5 via the output terminal 11, the DC link 12, the input terminal 10 to the battery 2. Such a power transmission results from the voltage source 8, if the electromagnetic force is higher than the DC voltage of the battery 2 and may cause high breaking torques which may not be tolerated due to safety requirements.

Thus, the current measurement device 14 monitors the current flow from the output terminal 11 to the input terminal 10 along the line 15 and feeds measuring signals to the controller 22. If the current flow reaches or exceeds a predefined threshold value, the controller 22 provides a control signal to the interrupt device 13, particularly to the driver element 26, which switches the switching element 23 into a blocking switching state. Thus, the power transmission from the output terminal 11 to the DC link 12 is interrupted and high breaking torques are avoided.

After switching the switching element 23 to the blocking state, a power or a current flow, respectively, from the battery 2 via the input terminal 10 into the direction of the DC link 12 may be induced by line inductivities between the battery 2 and the inverter 9. This transmitted power is converted into heat by the overvoltage protection element 28.

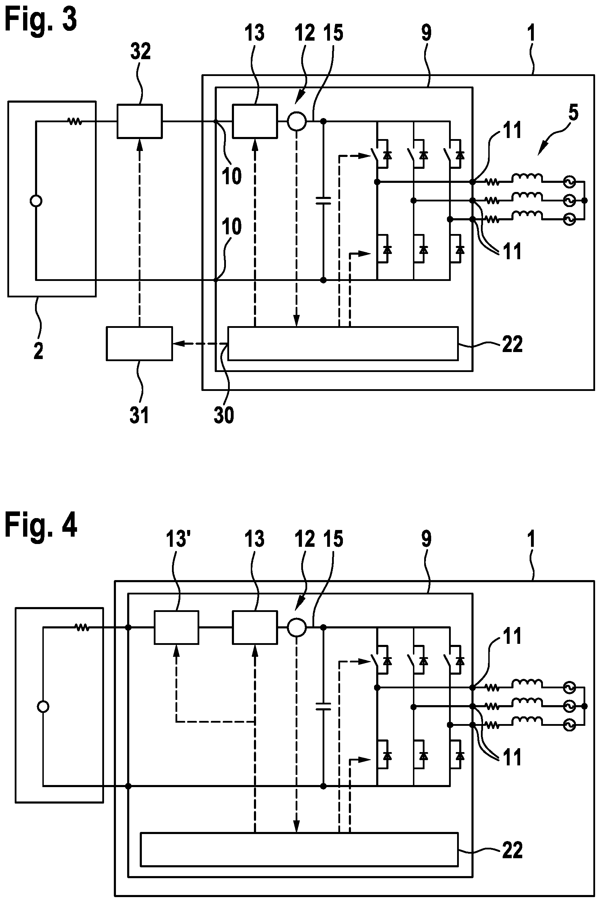

Fig. 3 is a block diagram of a second embodiment of an electric machine 1, which differs from the one being depicted in fig. 1, in that the controller 22 of the inverter 9 comprises an output port 30 connectable to a vehicle control unit 31. The controller 22 is configured to provide an output signal to the output port 30 when triggering the interrupt device 13 to interrupt the current flow along the line 15.

Between the battery 2 and the input terminal 10 a further interrupt device 32, such as a contactor, is connected in series and controllable by the vehicle control unit 31. Upon receiving the control signal provided by the control unit 22 the vehicle control unit 31 causes the external interrupt device 32 to interrupt the power transmission from the output terminal 11 to the battery 2.

Fig. 4 is a block diagram of a third embodiment of an electric machine 1, which differs from the one being depicted in fig. 1, in that the inverter 9 comprises a second interrupt device 13' in addition to the first interrupt device 13. The interrupt devices 13, 13' are connected in series and configured to interrupt the power transmission from the output terminal 11 to the input terminal 10 along the same line 15 when being triggered commonly by the control unit 22.

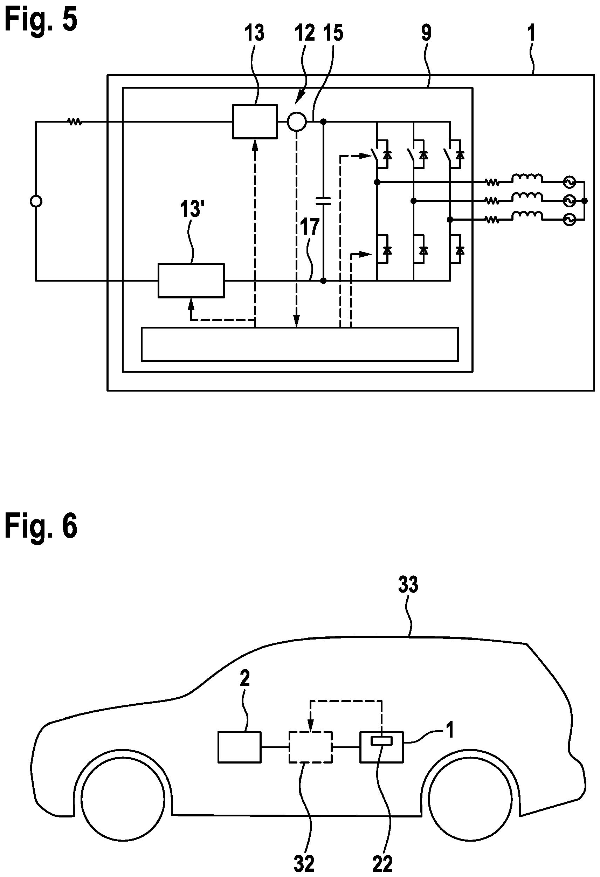

Fig. 5 is a block diagram of a fourth embodiment of an electric machine 1, which differs from the one being depicted in fig. 4, in that the second interrupt device 13' is arranged in the line 17 at the low potential of the DC link 12 instead of being connected to the line 15 at the high potential of the DC link 12.

According to a further embodiment corresponding to the afore-mentioned ones, the active short circuit mode is realized by a switching configuration in which the switching elements 18 connected to the high potential of the DC link 12 are in the blocking state and the switching elements 19 connected to the low potential of the DC link 12 are in the conducting switching state.

Fig. 6 is a schematic drawing of an embodiment of a vehicle 33, comprising an electric machine 1 according to one of the afore-mentioned embodiments and the battery 2. The battery 2 may be connected to the electric machine 1 via the vehicle's interrupt device 32, which may be controllable by the controller 22 of the electric machine 1.

## Claims

1. Inverter (9) for an electric machine (1), comprising
- an input terminal (10) connectable to a DC voltage,
- a DC link (12) connected to the input terminal (10), a first line (15) of the DC link (12) being at a high potential of the DC link (12) and a second line (17) of the DC link (12) being at a low potential of the DC link (12),
- an output terminal (11) connectable to stator windings (5) of the electric machine (1),
- a controller (22) configured to provide in a pulsing mode pulsing signals causing the inverter (9) to convert the DC voltage into a multiphase AC output voltage at the output terminal (11),
- a plurality of switching elements (18, 19) being interconnected to a half bridge for each phase of the AC output voltage and
- at least one interrupt device (13, 13') being arranged in one of the lines (15, 17) of the DC link (12),
wherein a current measurement device (14) is arranged in one of the lines (15, 17) of the DC link (12) and configured to measure a current flowing through the line (15, 17), wherein the controller (22) is configured
- to transfer the inverter (9) from the pulsing mode into an active short circuit mode and
- to control the switching elements (18, 19) to adopt a switching configuration, in which switching elements (18) connected to the high potential of the DC link (12) are in a conducting switching state and switching elements (19) connected to the low potential of the DC link (12) are in a blocking switching state or vice versa, for transferring the inverter (9) to the active short circuit mode
**characterized in that**
the controller (22) is configured to control the at least one interrupt device (13, 13') to interrupt a current flow along the line (15, 17) transmitting a power from the output terminal (11) to the input terminal (10) if the inverter (9) is transferred from the pulsing mode into the active short circuit mode and the measured current reaches and/or exceeds a predefined threshold value.

2. Inverter (9) according to claim 1, **characterized in that** the interrupt device (13, 13') comprises a switching element (23) with a switching path arranged in the line (15, 17).

3. Inverter (9) according to claim 2, **characterized in that** the switching element (23) comprises a transistor structure (24) providing the switching path.

4. Inverter (9) according to claim 2 or 3, **characterized in that** the interrupt device (13, 13') comprises a diode (25) connected in parallel to the switching path and allowing a power transmission from the input terminal (10) to the output terminal (11).

5. Inverter (9) according to any of the preceding claims, **characterized in that** the interrupt device (13, 13') comprises an overvoltage protection element (28) configured to convert a power transmitted from the input terminal (10) into the direction of the output terminal (11) into heat.

6. Inverter (9) according to any of the preceding claims, **characterized in that** the interrupt device (13, 13') is connected between the input terminal (10) and a smoothing capacitor (16) of the DC link (12).

7. Inverter (9) according to any of the preceding claims, **characterized in that** the controller (22) is configured to provide a control signal at an output port (30), when triggering the interrupt device (13, 13').

8. Inverter (9) according to any of the preceding claims, **characterized in that** two interrupt devices (13, 13') are provided.

9. Inverter (9) according to claim 8, **characterized in that** the interrupt devices (13, 13') are arranged in series in the same line.

10. Inverter (9) according to claim 8, **characterized in that** one interrupt device (13) is arranged in the first line (15) and one interrupt device (13') is arranged in the second line (17).

11. Electric machine (1) for a vehicle (33), comprising an inverter (9) according to any of claims 1 to 10 and stator windings (5) connected to the output terminal (11).

12. Vehicle (33), comprising an electric machine (1) according to claim 11 configured to drive the vehicle (33).

13. Method for operating an inverter (9) for an electric machine (1), comprising
- an input terminal (10) connectable to a DC voltage,
- a DC link (12) connected to the input terminal (10), a first line (15) of the DC link (12) being at a high potential of the DC link (12) and a second line (17) of the DC link (12) being at a low potential of the DC link (12),
- an output terminal (11) connectable to stator windings (5) of the electric machine (1), and
- at least one interrupt device (13, 13') being arranged in one of the lines (15, 17) of the DC link (12),
wherein a current measurement device (14) being arranged in one of the lines (15, 17) of the DC link (12) measures a current flowing through the line (15, 17), wherein in a pulsing mode pulsing signals causing the inverter (9) to convert the DC voltage into a multiphase AC output voltage at the output terminal (11) are provided and the inverter (9) is transferred from the pulsing mode into an active short circuit mode, wherein for transferring the inverter (9) to the active short circuit mode a plurality of switching elements (18, 19) being interconnected to a half bridge for each phase of the AC output voltage are controlled to adopt a switching configuration, in which switching elements (18) connected to the high potential of the DC link (12) are in a conducting switching state and switching elements (19) connected to the low potential of the DC link (12) are in a blocking switching state or vice versa,
**characterized in that**
the at least one interrupt device (13, 13') interrupts a current flow along the line (15, 17) transmitting a power from the output terminal (11) to the input terminal (10) if the inverter (9) is transferred from the pulsing mode into the active short circuit mode and the measured current reaches and/or exceeds a predefined threshold value.

## Patentansprüche

1. Wechselrichter (9) für eine elektrische Maschine (1), umfassend
- einen Eingangsanschluss (10), der mit einer DC-Spannung verbunden werden kann,
- eine DC-Verbindung (12), die mit dem Eingangsanschluss (10) verbunden ist, wobei eine erste Leitung (15) der DC-Verbindung (12) sich auf einem hohen Potential der DC-Verbindung (12) befindet und sich eine zweite Leitung (17) der DC-Verbindung (12) auf einem niedrigen Potential der DC-Verbindung (12) befindet,
- einen Ausgangsanschluss (11), der mit Statorwicklungen (5) der elektrischen Maschine (1) verbunden werden kann,
- einen Controller (22), der ausgelegt ist zum Bereitstellen in einem Pulsmodus von Pulssignalen, die bewirken, dass der Wechselrichter (9) die DC-Spannung in eine Multiphasen-AC-Ausgangsspannung an dem Ausgangsanschluss (11) umwandelt,
- mehrere Schaltelemente (18, 19), die zu einer Halbbrücke für jede Phase der AC-Ausgangsspannung zusammengeschaltet sind, und
- mindestens eine Unterbrechungseinrichtung (13, 13'), die in einer der Leitungen (15, 17) der DC-Verbindung (12) angeordnet ist,
wobei eine Strommesseinrichtung (14) in einer der Leitungen (15, 17) der DC-Verbindung (12) angeordnet und ausgelegt ist zum Messen eines durch die Leitung (15, 17) fließenden Stroms, wobei der Controller (22) ausgelegt ist
- zum Transferieren des Wechselrichters (9) von dem Pulsmodus in einen aktiven Kurzschlussmodus, und
- zum Steuern der Schaltelemente (18, 19) zum Annehmen einer Schaltkonfiguration, in der mit dem hohen Potential der DC-Verbindung (12) verbundene Schaltelemente (18) sich in einem leitenden Schaltzustand befindet und mit dem niedrigen Potential der DC-Verbindung (12) verbundene Schaltelemente (19) sich in einem blockierenden Schaltzustand befinden oder umgekehrt, zum Transferieren des Wechselrichters (9) zu dem aktiven Kurzschlussmodus,
**dadurch gekennzeichnet, dass**
der Controller (22) ausgelegt ist zum Steuern der mindestens einen Unterbrechungseinrichtung (13, 13') zum Unterbrechen eines Stromflusses entlang der Leitung (15, 17), die eine Leistung von dem Ausgangsanschluss (11) zu dem Eingangsanschluss (10) überträgt, falls der Wechselrichter (9) von dem Pulsmodus in den aktiven Kurzschlussmodus transferiert wird und der gemessene Strom einen vordefinierten Schwellwert erreicht und/oder übersteigt.

2. Wechselrichter (9) nach Anspruch 1, **dadurch gekennzeichnet, dass** die Unterbrechungseinrichtung (13, 13') ein Schaltelement (23) mit einem Schaltpfad, in der Leitung (15, 17) angeordnet, umfasst.

3. Wechselrichter (9) nach Anspruch 2, **dadurch gekennzeichnet, dass** das Schaltelement (23) eine den Schaltpfad bereitstellende Transistorstruktur (24) umfasst.

4. Wechselrichter (9) nach Anspruch 2 oder 3, **dadurch gekennzeichnet, dass** die Unterbrechungseinrichtung (13, 13') eine Diode (25) umfasst, die parallel zu dem Schaltpfad geschaltet ist und eine Leistungsübertragung von dem Eingangsanschluss (10) zu dem Ausgangsanschluss (11) gestattet.

5. Wechselrichter (9) nach einem der vorhergehenden Ansprüche, **dadurch gekennzeichnet, dass** die Unterbrechungseinrichtung (13, 13') ein Überspannungsschutzelement (28) umfasst, das ausgelegt ist zum Umwandeln einer von dem Eingangsanschluss (10) in die Richtung des Ausgangsanschlusses (11) übertragenen Leistung in Wärme.

6. Wechselrichter (9) nach einem der vorhergehenden Ansprüche, **dadurch gekennzeichnet, dass** die Unterbrechungseinrichtung (13, 13') zwischen den Eingangsanschluss (10) und einem Glättungskondensator (16) der DC-Verbindung (12) geschaltet ist.

7. Wechselrichter (9) nach einem der vorhergehenden Ansprüche, **dadurch gekennzeichnet, dass** der Controller (22) ausgelegt ist zum Liefern eines Steuersignals an einem Ausgangsport (30), wenn die Unterbrechungseinrichtung (13, 13') ausgelöst wird.

8. Wechselrichter (9) nach einem der vorhergehenden Ansprüche, **dadurch gekennzeichnet, dass** zwei Unterbrechungseinrichtungen (13, 13') vorgesehen sind.

9. Wechselrichter (9) nach Anspruch 8, **dadurch gekennzeichnet, dass** die Unterbrechungseinrichtungen (13, 13') in Reihe in der gleichen Leitung angeordnet sind.

10. Wechselrichter (9) nach Anspruch 8, **dadurch gekennzeichnet, dass** eine Unterbrechungseinrichtung (13) in der ersten Leitung (156) angeordnet ist und eine Unterbrechungseinrichtung (13') in der zweiten Leitung (17) angeordnet ist.

11. Elektrische Maschine (1) für ein Fahrzeug (33), umfassend einen Wechselrichter (9) nach einem der Ansprüche 1 bis 10 und Statorwicklungen (5), die mit dem Ausgangsanschluss (11) verbunden sind.

12. Fahrzeug (33), umfassend eine elektrische Maschine (1) nach Anspruch 11, ausgelegt zum Antreiben des Fahrzeugs (33).

13. Verfahren zum Betreiben eines Wechselrichters (9) für eine elektrische Maschine (1), umfassend
- einen Eingangsanschluss (10), der mit einer DC-Spannung verbunden werden kann,
- eine DC-Verbindung (12), die mit dem Eingangsanschluss (10) verbunden ist, wobei eine erste Leitung (15) der DC-Verbindung (12) sich auf einem hohen Potential der DC-Verbindung (12) befindet und sich eine zweite Leitung (17) der DC-Verbindung (12) auf einem niedrigen Potential der DC-Verbindung (12) befindet,
- einen Ausgangsanschluss (11), der mit Statorwicklungen (5) der elektrischen Maschine (1) verbunden werden kann, und
- mindestens eine Unterbrechungseinrichtung (13, 13'), die in einer der Leitungen (15, 17) der DC-Verbindung (12) angeordnet ist,
wobei eine Strommesseinrichtung (14), in einer der Leitungen (15, 17) der DC-Verbindung (12) angeordnet, einen durch die Leitung (15, 17) fließenden Strom misst,
wobei in einem Pulsmodus Pulssignale, die bewirken, dass der Wechselrichter (9) die DC-Spannung in eine Multiphasen-AC-Ausgangsspannung an dem Ausgangsanschluss (11) umwandelt, bereitgestellt werden, und der Wechselrichter (9) von dem Pulsmodus in einen aktiven Kurzschlussmodus transferiert wird, wobei zum Transferieren des Wechselrichters (9) in den aktiven Kurzschlussmodus mehrere Schaltelemente (18, 19), die zu einer Halbbrücke für jede Phase der AC-Ausgangsspannung zusammengeschaltet sind, gesteuert werden zum Annehmen einer Schaltkonfiguration, in der mit dem hohen Potential der DC-Verbindung (12) verbundene Schaltelemente (18) sich in einem leitenden Schaltzustand befinden und mit dem niedrigen Potential der DC-Verbindung (12) verbundene Schaltelemente (19) sich in einem blockierenden Schaltzustand befinden oder umgekehrt,
**dadurch gekennzeichnet, dass**
die mindestens eine Unterbrechungseinrichtung (13, 13') einen Stromfluss entlang der Leitung (15, 17) unterbricht, die eine Leistung von dem Ausgangsanschluss (11) zu dem Eingangsanschluss (10) überträgt, falls der Wechselrichter (9) von dem Pulsmodus in den aktiven Kurzschlussmodus transferiert wird und der gemessene Strom einen vordefinierten Schwellwert erreicht und/oder übersteigt.

## Revendications

1. Onduleur (9) pour une machine électrique (1), comprenant
- une borne d'entrée (10) pouvant être connectée à une tension continue,
- une liaison à courant continu (12) connectée à la borne d'entrée (10), une première ligne (15) de la liaison à courant continu (12) étant à un potentiel haut de la liaison à courant continu (12) et une deuxième ligne (17) de la liaison à courant continu (12) étant à un potentiel bas de la liaison à courant continu (12),
- une borne de sortie (11) pouvant être connectée à des enroulements de stator (5) de la machine électrique (1),
- un contrôleur (22) configuré pour émettre en mode impulsionnel des signaux impulsionnels amenant l'onduleur (9) à convertir la tension continue en une tension de sortie alternative multiphase à la borne de sortie (11),
- une pluralité d'éléments de commutation (18, 19) interconnectés à un demi-pont pour chaque phase de la tension de sortie alternative, et
- au moins un dispositif d'interruption (13, 13') disposé sur l'une des lignes (15, 17) de la liaison à courant continu (12),
dans lequel un dispositif de mesure de courant (14) est disposé sur l'une des lignes (15, 17) de la liaison à courant continu (12) et configuré pour mesurer un courant circulant sur la ligne (15, 17), le contrôleur (22) étant configuré pour
- faire passer l'onduleur (9) du mode impulsionnel à un mode court-circuit actif, et
- commander les éléments de commutation (18, 19) pour qu'ils adoptent une configuration de commutation, les éléments de commutation (18) connectés au potentiel haut de la liaison à courant continu (12) étant dans un état de commutation conducteur et les éléments de commutation (19) connectés au potentiel bas de la liaison à courant continu (12) étant dans un état de commutation non-passant, ou vice versa, pour faire passer l'onduleur (9) au mode court-circuit actif,
**caractérisé en ce que**
le contrôleur (22) est configuré pour commander l'au moins un dispositif d'interruption (13, 13') pour interrompre un courant circulant le long de la ligne (15, 17) transmettant une puissance de la borne de sortie (11) à la borne d'entrée (10) si l'onduleur (9) est amené à passer du mode impulsionnel au mode court-circuit actif et si le courant mesuré atteint et/ou excède une valeur seuil prédéfinie.

2. Onduleur (9) selon la revendication 1, **caractérisé en ce que** le dispositif d'interruption (13, 13') comprend un élément de commutation (23) ayant une voie de commutation disposée sur la ligne (15, 17).

3. Onduleur (9) selon la revendication 2, **caractérisé en ce que** l'élément de commutation (23) comprend une structure de transistor (24) réalisant la voie de commutation.

4. Onduleur (9) selon la revendication 2 ou 3, **caractérisé en ce que** le dispositif d'interruption (13, 13') comprend une diode (25) connectée en parallèle à la voie de commutation et permettant une transmission de puissance de la borne d'entrée (10) à la borne de sortie (11) .

5. Onduleur (9) selon l'une quelconque des revendications précédentes, **caractérisé en ce que** le dispositif d'interruption (13, 13') comprend un élément de protection contre les surtensions (28) configuré pour convertir en chaleur une puissance transmise de la borne d'entrée (10) vers la borne de sortie (11).

6. Onduleur (9) selon l'une quelconque des revendications précédentes, **caractérisé en ce que** le dispositif d'interruption (13, 13') est connecté entre la borne d'entrée (10) et un condensateur de lissage (16) de la liaison à courant continu (12).

7. Onduleur (9) selon l'une quelconque des revendications précédentes, **caractérisé en ce que** le contrôleur (22) est configuré pour produire un signal de commande au niveau d'un port de sortie (30), lors du déclenchement du dispositif d'interruption (13, 13').

8. Onduleur (9) selon l'une quelconque des revendications précédentes, **caractérisé en ce que** deux dispositifs d'interruption (13, 13') sont prévus.

9. Onduleur (9) selon la revendication 8, **caractérisé en ce que** les dispositifs d'interruption (13, 13') sont disposés en série sur la même ligne.

10. Onduleur (9) selon la revendication 8, **caractérisé en ce qu'**un dispositif d'interruption (13) est disposé sur la première ligne (15) et un dispositif d'interruption (13') est disposé sur la deuxième ligne (17) .

11. Machine électrique (1) pour un véhicule (33), comprenant un onduleur (9) selon l'une quelconque des revendications 1 à 10 et des enroulements de stator (5) connectés à la borne de sortie (11).

12. Véhicule (33), comprenant une machine électrique (1) selon la revendication 11, configurée pour piloter le véhicule (33).

13. Procédé de fonctionnement d'un onduleur (9) pour une machine électrique (1), comprenant
- une borne d'entrée (10) pouvant être connectée à une tension continue,
- une liaison à courant continu (12) connectée à la borne d'entrée (10), une première ligne (15) de la liaison à courant continu (12) étant à un potentiel haut de la liaison à courant continu (12) et une deuxième ligne (17) de la liaison à courant continu (12) étant à un potentiel bas de la liaison à courant continu (12),
- une borne de sortie (11) pouvant être connectée à des enroulements de stator (5) de la machine électrique (1), et
- au moins un dispositif d'interruption (13, 13') disposé sur l'une des lignes (15, 17) de la liaison à courant continu (12),
un dispositif de mesure du courant (14) disposé sur l'une des lignes (15, 17) de la liaison à courant continu (12) mesurant un courant circulant sur la ligne (15, 17), où, dans un mode impulsionnel, des signaux impulsionnels sont produits, qui amènent l'onduleur (9) à convertir la tension continue en une tension de sortie alternative multiphase à la borne de sortie (11), et l'onduleur (9) est amené à passer du mode impulsionnel à un mode court-circuit actif, et, pour faire passer l'onduleur (9) au mode court-circuit actif, un pluralité d'éléments de commutation (18, 19) interconnectés à un demi-point pour chaque phase de la tension de sortie alternative sont commandés de façon à adopter une configuration de commutation, les éléments de commutation (18) connectés au potentiel haut de la liaison à courant continu (12) étant dans un état de commutation conducteur et les éléments de commutation (19) connectés au potentiel bas de la liaison à courant continu (12) étant dans un état de commutation non-passant, ou vice versa,
**caractérisé en ce que**
l'au moins un dispositif d'interruption (13, 13') interrompt un courant circulant le long de la ligne (15, 17) transmettant une puissance de la borne de sortie (11) à la borne d'entrée (10) si l'onduleur (9) est amené à passer du mode impulsionnel au mode court-circuit actif et si le courant mesuré atteint et/ou excède une valeur seuil prédéfinie.
